# EUROPÄISCHE PATENTSCHRIFT

(11) **EP 4 201 264 B1**
(45) Veröffentlichungstag und Bekanntmachung des Hinweises auf die Patenterteilung: **09.10.2024**
(21) Anmeldenummer: 22188552.8
(22) Anmeldetag: 03.08.2022
(51) Int. Cl.: A47F 5/13, A47F 5/16, B62B 5/00, A47B 47/00

(54) **VERKAUFSTISCH- UND TRANSPORTBEHÄLTER SOWIE NACHRÜSTSATZ**
SALES TABLE AND TRANSPORT CONTAINER AND RETROFITTING KIT
COMPTOIR DE VENTE ET RECIPIENT DE TRANSPORT, AINSI QU'ENSEMBLE DE MISE À NIVEAU

(30) Priorität: 21.12.2021 DE 202021106941 U
(43) Veröffentlichungstag der Anmeldung: 28.06.2023
(73) Patentinhaber: Wanzl GmbH & Co. KGaA, 89340 Leipheim (DE)
(72) Erfinder: Hupfauer, Markus, 89264 Weißenhorn (DE)

(56) Entgegenhaltungen:
- WO-A1-2019/005572
- DE-U1- 202004 018 384
- US-A1- 2015 028 555

## Beschreibung

Die vorliegende Erfindung betrifft einen Verkaufstisch- und Transportbehälter sowie einen Nachrüstsatz für diesen.

Verkaufstisch- und Transportbehälter dieser Gattung finden Einsatz in Supermärkten für den Abverkauf von Aktionsware. Sie dienen als Darbietungsbehälter im Supermarkt. Solche Behälter sollen aber auch transportierbar beladen, zum Anordnen im Supermarkt sein. Nach dem Abverkauf der Ware werden die Behälter in einem Nebenraum mit neuer und/oder anderer Ware befüllt. Für den Abverkauf der Ware werden die Behälter in einer platz- und raumsparenden Form angeordnet.

Weiterhin ist aus der DE 299 14 238.8 ein Tisch beschrieben, der sich durch Zusammenstecken verschiedener Einzelteile in seine Gebrauchsform für den Abverkauf von Ware bringen lässt. Hierbei werden in die Füße eines Basisrahmens zuerst Verbindungsteile eingesteckt, bevor die vier Pfosten, die auch die Seitenwände tragen, dann auf diese Verbindungeile aufgesteckt werden.

In einer weiterführenden Variante, wie z.B. in der DE 20 2012 012 164 U1 beschrieben, wird eine Verkaufs- und Transportbehälter wiederum in Form eines Gittertischs zur Warenpräsentation beschrieben. Dieser Behälter ist aus paarweise gegenüberliegenden vertikalen Längs- und Querseitenwänden gebildet. Zwischen diesen Wänden ist eine waagrechte Bodenwand vorgesehen. Die Längs- und Querseitenwände sind an den Eckpfosten eines Gestells angeordnet.

Im bodenseitigen Bereich des Gestells sind vier Stützrollen vorgesehen, zwei gegenüberliegende Rollen sind mit einer Bremsvorrichtung versehen. Somit wird bei Bedarf eine Fahrbewegung des Behälters ermöglicht und dennoch ein sicher Stand z.B. während des Verkaufs oder Beladens im Verkaufsraum sicherstellt. Weitere Verkaufs- und Transportbehälter sind aus US 2015/028555 A1 und KR 20170066923 A bekannt.

Viele dieser Behälter werden heute standartmäßig mit Rollen und einer Bremsvorrichtung ausgestattet. Ältere Modelle wurden meist ohne Rollen und Bremsvorrichtung gefertigt. Da diese Behälter nicht komplett ausgetauscht werden sollen, besteht die Aufgabe der vorliegenden Erfindung darin, einen verbesserten Behälter bereitzustellen, der mit einem nachrüstbaren Fahrgestell bereitgestellt werden soll.

Diese Aufgabe wird erfindungsgemäß gelöst durch einen Verkaufstisch- und Transportbehälter mit den Merkmalen des Anspruchs 1. Danach ist vorgesehen, dass der Verkaufstisch- und Transportbehälter mit gegenüberliegenden Längs- und Querseitenwänden ausgestattet ist, die an den Eckpfosten eines Gestells wechselbar angeordnet sind, wobei weiterhin eine waagrechte Bodenwand an den Längs- und Querseitenwänden angeordnet ist, wobei das Gestell zwei Längsstäbe aufweist, die die Eckpfosten miteinander verbindet und weiterhin zwei Querstäbe aufweist, die an den Längsstäben angeordnet sind, und wobei ein Nachrüstsatz mit Rollen vorgesehen ist, der wechselbar am Gestell angeordnet ist.

Die Erfindung basiert auf dem Grundgedanken, dass ein Nachrüstsatz an den bereits bestehenden Behältern angeordnet werden kann. Dadurch kann ein solcher Behälter in einem Supermarkt auf einfache Weise bewegt, insbesondere verschoben werden.

In einer bevorzugten Ausführungsform ist der Nachrüstsatz mit vorzugsweise vier Rollen ausgestattet. Dies bietet ein angenehmes und vereinfachtes Schieben oder Verschieben des Transportbehälters auch in beladenem Zustand. Eine andere Anzahl an Rollen ist denkbar.

Weiterhin kann der Nachrüstsatz wenigstens eine Bremsvorrichtung aufweisen. Hierbei hat es sich als sinnvoll erwiesen, dass die Bremsvorrichtung vorzugsweise auf zwei Rollen an einer der Querseiten des Behälters wirkt.

Weiterhin kann die Bremsvorrichtung einen Bremshebel aufweisen. Dieser ermöglicht ein einfaches Auslösen der Bremsvorrichtung, wiederum aber auch wieder ein einfaches Lösen, um ein Fahren wieder zu ermöglichen. Der Bremshebel kann auf einfache Weise mit dem Fuß betätigt werden. Ein Bücken, um eine Betätigung mit der Hand vorzunehmen, ist hierbei nicht notwendig.

Üblicherweise sind die bekannten Verkaufs- und Transportbehälter rechteckig ausgeführt, so dass es sich als vorteilhaft erweist, wenn sich der Nachrüstsatz an dieser Form orientiert, diese aufnimmt und/oder ebenfalls eine überwiegend rechteckige Form aufweist.

Erfindungsgemäß ist der Nachrüstsatz an den Querstäben des Behälters angeordnet. Diese Querstäbe sind ohnehin vorhanden und stabilisieren den Behälter, so dass es sich anbietet, den Nachrüstsatz an diesen Querstäben anzuordnen.

Erfindungsgemäß weist der Nachrüstsatz für das Anordnen an den beiden Querstäben wenigstens vier Halteösen auf. Somit kann der Nachrüstsatz in einer einfachen Art und Weise an den Querstäben angebracht und gesichert werden.

Weiterhin sind die Halteösen U-förmig ausgeführt. Weiterhin sind die Halteösen in Größe und Form entsprechend den Querstäben geformt. Diese Form der Halteösen bietet eine einfache Art der Anordnung des Nachrüstsatzes an den Querstäben.

Darüber hinaus bietet es sich an, dass die Halteösen symmetrisch angeordnet sind. Dies ermöglicht ein einfaches Anbringen und weiterhin bevorzugtes Fahrverhalten.

Auch hat es sich als sinnvoll erwiesen, dass der Nachrüstsatz aus Rahmenteilen gebildet ist. Hierdurch kann eine günstige Herstellung des Nachrüstsatzes gewährleistet werden. Weiterhin kann die Größe des Nachrüstsatzes je nach Größe des Behälters auf einfache Art anpassbar sein.

Weitere Einzelheiten und Vorteile der Erfindung sollen nun anhand eines in der Zeichnung näher dargestellten Ausführungsbeispiels erläutert werden.

Es zeigen:
- Fig. 1: eine perspektivische Ansicht eines erfindungsgemäßen Behälters mit einem Nachrüstsatz;
- Fig. 2: eine weitere perspektivische Ansicht des in Fig. 1 dargestellten erfindungsgemäßen Behälters mit Nachrüstsatz;
- Fig. 3: eine erste Seitenansicht des in Fig. 1 dargestellten erfindungsgemäßen Behälters;
- Fig. 4: eine zweite Seitenansicht des in Fig. 1 dargestellten erfindungsgemäßen Behälters;
- Fig. 5: eine Ansicht des Behälters mit Nachrüstsatz von unten;
- Fig. 6: eine perspektivische Ansicht eines erfindungsgemäßen Nachrüstsatzes;
- Fig. 7: eine Draufsicht des erfindungsgemäßen Nachrüstsatzes;
- Fig. 8: eine erste Seitenansicht des erfindungsgemäßen Nachrüstsatzes;
- Fig. 9: eine zweite Seitenansicht des erfindungsgemäßen Nachrüstsatzes;

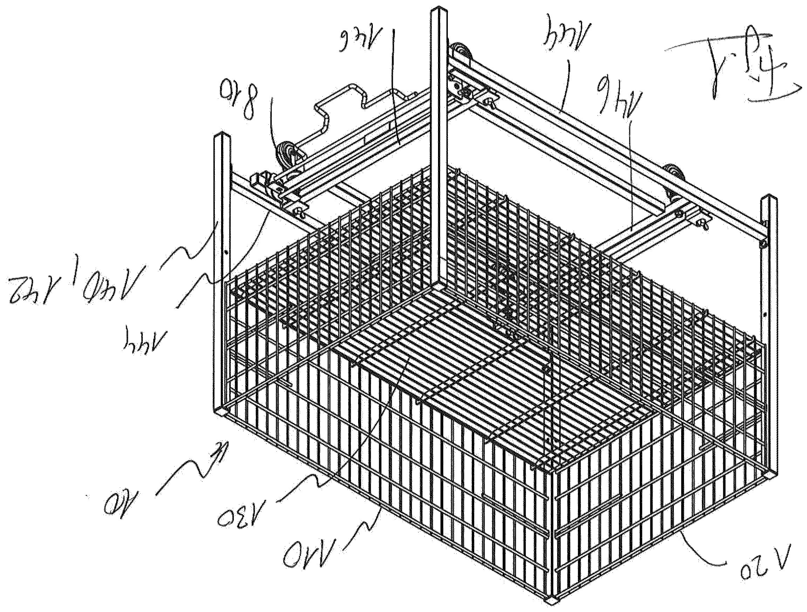

Fig. 1 zeigt eine perspektivische Ansicht eines erfindungsgemäßen Behälters mit einem Nachrüstsatz 80. Der Behälter 10 ist aus Längs- und Querseitenwänden 110, 120 gebildet, die an den Eckposten 142 eines Gestells 140 wechselbar angeordnet sind. Es ist eine waagrechte Bodenwand 130 an den Längs- und Querseitenwänden 110, 120 angeordnet. Das Gestell weist zwei Längsstäbe 144 auf. Diese verbinden die Eckpfosten miteinander. Weiterhin sind zwei Querstäbe 146 vorgesehen, die an den Längsstäben 144 angeordnet sind. Der Nachrüstsatz 80 ist mit vier Rollen 810 ausgestattet und ist wechselbar am Gestell 140 angeordnet.

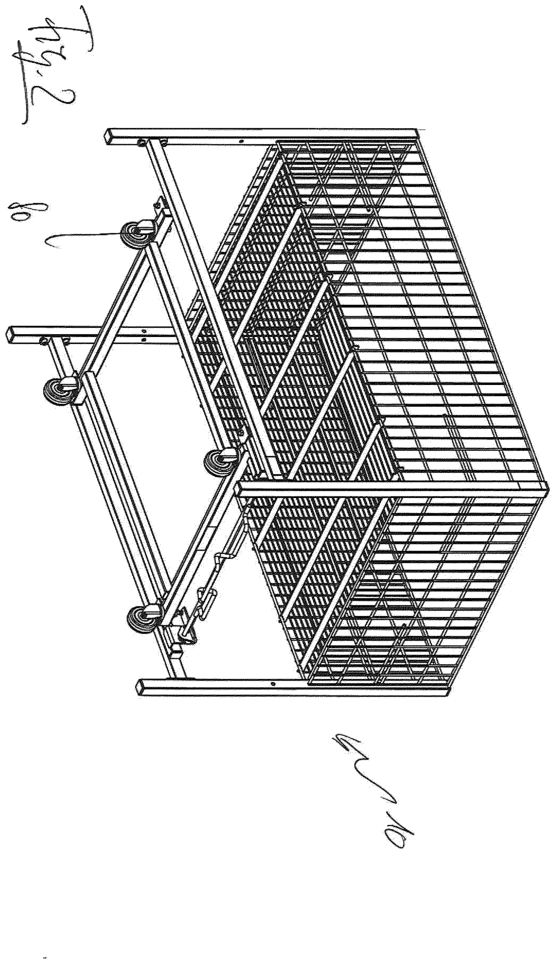

In Fig. 2 ist eine weitere perspektivische Ansicht des in Fig. 1 dargestellten erfindungsgemäßen Behälters 10 mit Nachrüstsatz 80 gezeigt.

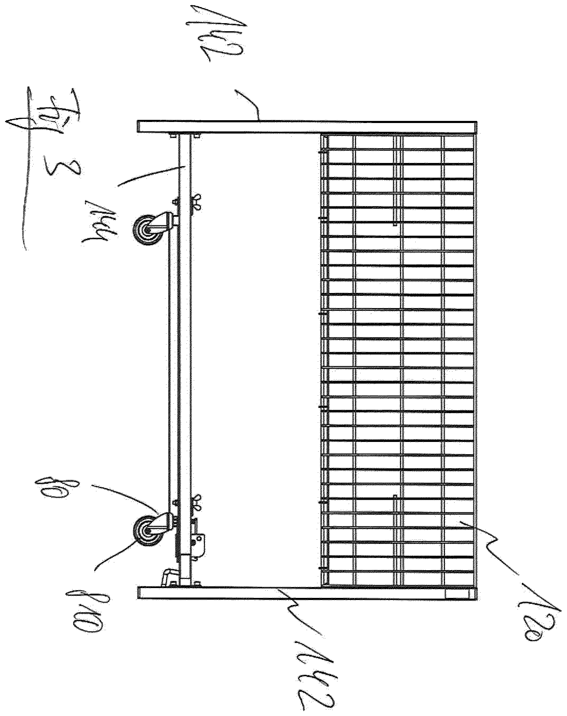

Fig. 3 zeigt eine erste Seitenansicht des Behälters 10 mit einem Nachrüstsatz 80.

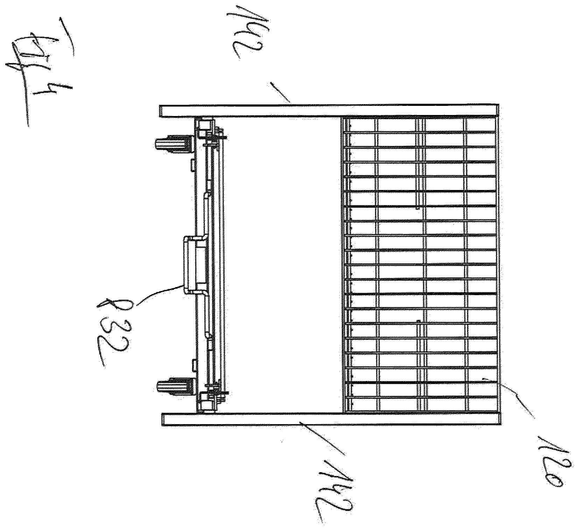

Weiterhin ist in Fig. 4 eine zweite Seitenansicht des erfindungsgemäßen Behälters 10 mit Nachrüstsatz 80 dargestellt.

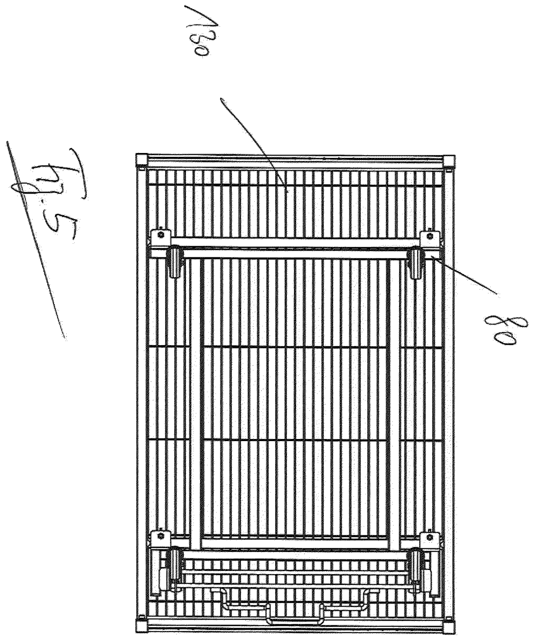

Fig. 5 zeigt eine Ansicht des Behälters 10 mit Nachrüstsatz 80 von unten.

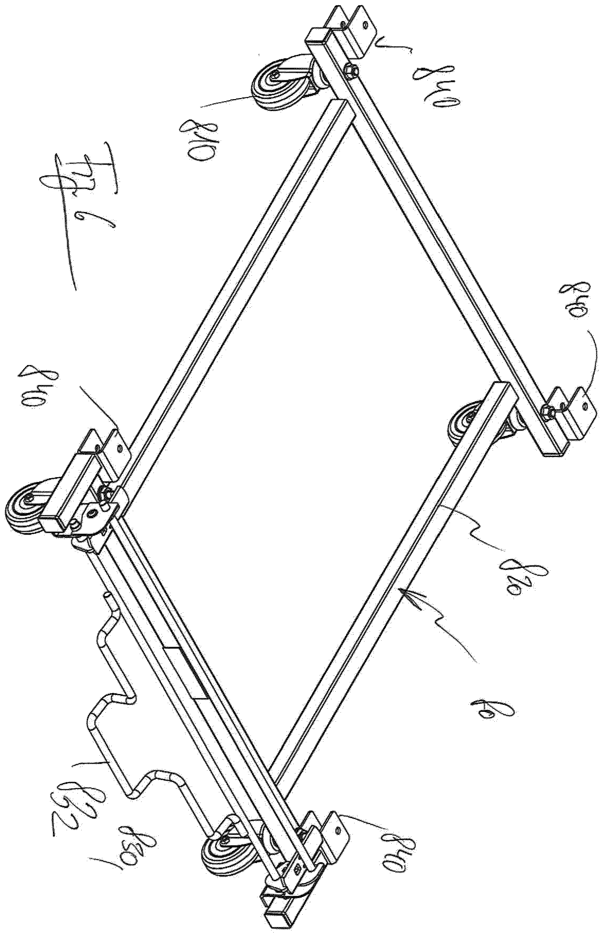

Fig. 6 zeigt eine perspektivische Ansicht eines erfindungsgemäßen Nachrüstsatzes 80. Der Nachrüstsatz 80 weist vier Rollen 810 auf. Zum wechselbaren Anbringen des Nachrüstsatzes 80 sind vier Halteösen 840 vorgesehen. Diese sind an den Ecken eines Rahmenteils 820 ortsfest angebracht. Im gezeigten Beispiel sind jeweils zwei Halteösen 840 an den Querstreben der Rahmenteile 820 angebracht. Eine der Querseiten des Rahmenteils 820 weist eine Bremsvorrichtung 830 auf. Diese wirkt auf die zwei benachbarten Rollen 810 an der Querseite des Nachrüstsatzes 80. Zum Auslösen ist ein Bremshebel 832 vorgesehen. Dieser ist aus einem geformten Drahtteil gefertigt.

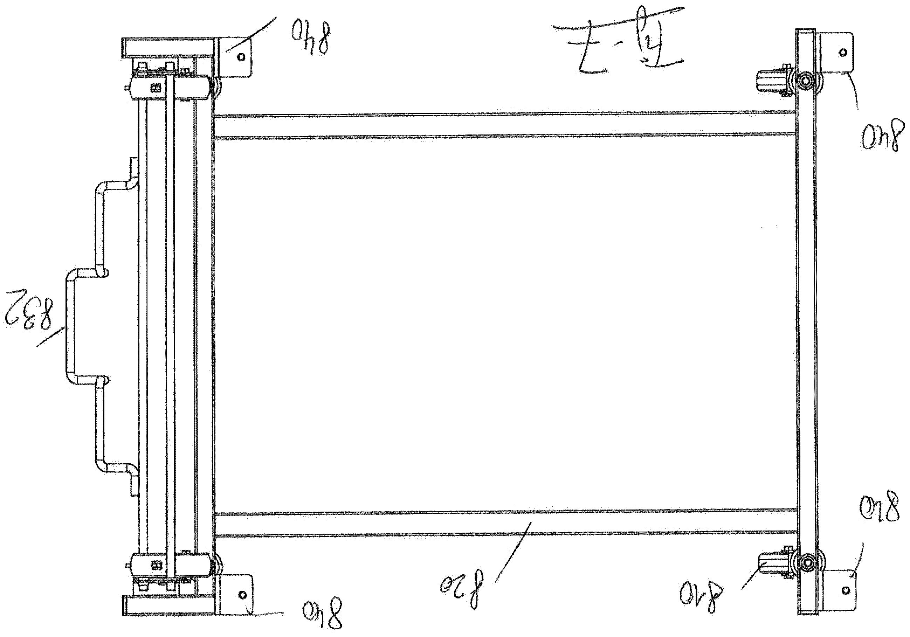

In Fig. 7 ist eine Draufsicht des in Fig. 6 dargestellten erfindungsgemäßen Nachrüstsatzes 80 gezeigt.

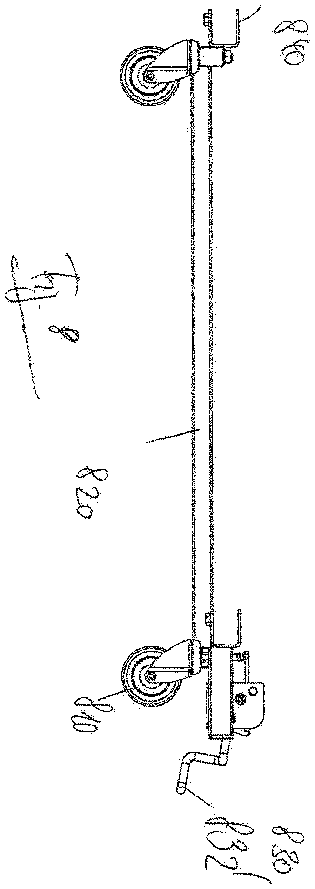

Fig. 8 zeigt eine erste Seitenansicht des Nachrüstsatzes 80.

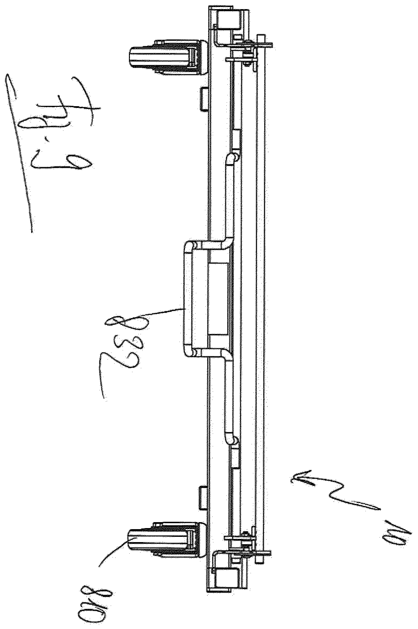

In Fig. 9 ist eine zweite Seitenansicht des Nachrüstsatzes 80 dargestellt.

### Bezugszeichen

- 10: Verkaufs- und Transportbehälter
- 110: Längsseitenwände
- 120: Querseitenwände
- 130: Bodenwand
- 140: Gestell
- 142: Eckpfosten
- 144: Längsstäbe
- 146: Querstäbe

- 80: Nachrüstsatz
- 810: Rollen
- 820: Rahmen, Rahmenteil
- 830: Bremsvorrichtung
- 832: Bremshebel, Betätigungshebel
- 840: Halteöse

## Patentansprüche

1. Verkaufs- und Transportbehälter (10) mit gegenüberliegenden Längs- und Querseitenwänden (110, 120), die an den Eckpfosten (142) eines Gestells (140) wechselbar angeordnet sind, wobei weiterhin eine waagrechte Bodenwand (130) an den Längs- und Querseitenwänden (110, 120) angeordnet ist, wobei das Gestell (140) zwei Längsstäbe (144) aufweist, die die Eckposten (142) miteinander verbindet und weiterhin zwei Querstäbe (146) aufweist, die an den Längsstäben (144) angeordnet sind, und wobei ein Nachrüstsatz (80) mit Rollen (810) vorgesehen ist, der wechselbar am Gestell (140) angeordnet ist,
wobei der Nachrüstsatz (80) an den Querstäben (146) des Behälters angeordnet ist,
wobei der Nachrüstsatz (80) für das Anordnen an den beiden Querstäben vier Halteösen aufweist,
wobei die Halteösen (840) U-förmig ausgeführt sind und wobei weiterhin die Halteösen (840) in Größe und Form entsprechend den Querstäben (146) geformt sind, und daher anordbar an den Querstäben (146) des Behälters (10) ausgeführt sind und wobei weiterhin die Halteösen (840) an den Ecken eines Rahmenteils (820) ortsfest angebracht sind.

2. Verkaufs- und Transportbehälter (10) nach Anspruch 1, **dadurch gekennzeichnet, dass** wobei der Nachrüstsatz (80) wenigstens eine Rolle (810), vorzugsweise vier Rollen aufweist.

3. Verkaufs- und Transportbehälter (10) nach Anspruch 1, **dadurch gekennzeichnet, dass** wobei der Nachrüstsatz (80) wenigstens eine Bremsvorrichtung (830) aufweist, wobei die Bremsvorrichtung (830) vorzugsweise auf zwei Rollen (810) an einer der Querseiten des Behälters (10) wirkt.

4. Verkaufs- und Transportbehälter (10) nach Anspruch 3, **dadurch gekennzeichnet, dass** wobei die Bremsvorrichtung (830) einen Bremshebel (832) aufweist.

5. Verkaufs- und Transportbehälter (10) nach Anspruch 4, **dadurch gekennzeichnet, dass** der Bremshebel (832) aus einem geformten Drahtteil gefertigt ist.

6. Verkaufs- und Transportbehälter (10) nach Anspruch 1, **dadurch gekennzeichnet, dass** der Nachrüstsatz (80) eine überwiegend rechteckige Form aufweist.

7. Verkaufs- und Transportbehälter (10) nach Anspruch 1_7, **dadurch gekennzeichnet, dass** die Halteösen (840) symmetrisch angeordnet sind.

8. Verkaufs- und Transportbehälter (10) nach Anspruch 1, **dadurch gekennzeichnet, dass** der Nachrüstsatz (80) aus Rahmenteilen (820) gebildet ist.

## Claims

1. Sales and transport container (10) having mutually opposite longitudinal and transverse lateral walls (110, 120) which are disposed so as to be replaceable on the corner posts (142) of a frame (140), wherein furthermore a horizontal base wall (120) is disposed on the longitudinal and transverse lateral walls (110, 120), wherein the frame (140) has two longitudinal bars (144) which connected the corner posts (142) to one another and furthermore has two transverse bars (146) which are disposed on the longitudinal bars (144), and wherein provided is a retrofitting kit (80) which has castors (810) and is disposed so as to be replaceable on the frame (140), wherein the retrofitting kit (80) is disposed on the transverse bars (146) of the container; wherein the retrofitting kit (80) for disposal on the two transverse bars has four holding eyelets, wherein the holding eyelets (840) are embodied so as to be U-shaped, and wherein furthermore the holding eyelets (840) in terms of size and shape are shaped so as to correspond to the transverse bars (146) and are, therefore, embodied so as to be able to be disposed on the transverse bars (146) of the container (10), and wherein furthermore the holding eyelets (840) are attached so as to be stationary on the corners of a frame part (820).

2. Sales and transport container (10) according to Claim 1, **characterized in that,** wherein the retrofitting kit (80) has at least one castor (810), preferably four castors.

3. Sales and transport container (10) according to Claim 1, **characterized in that,** wherein the retrofitting kit (80) has at least one brake device (830), wherein the brake device (830) preferably acts on two castors (810) on one of the transverse sides of the container (10).

4. Sales and transport container (10) according to Claim 3, **characterized in that,** wherein the brake device (830) has a brake lever (832).

5. Sales and transport container (10) according to Claim 4, **characterized in that** the brake lever (832) is made from a formed wire part.

6. Sales and transport container (10) according to Claim 1, **characterized in that** the retrofitting kit (80) has a predominantly rectangular shape.

7. Sales and transport container (10) according to Claim 7, **characterized in that** the holding eyelets (840) are symmetrically disposed.

8. Sales and transport container (10) according to Claim 1, **characterized in that** the retrofitting kit (80) is formed from frame parts (820).

## Revendications

1. Contenant de vente et de transport (10) avec des parois latérales longitudinales et transversales opposées (110, 120) agencées de manière interchangeable sur les montants de coin (142) d'un châssis (140), une paroi de fond horizontale (130) étant en outre agencée sur les parois latérales longitudinales et transversales (110, 120), le châssis (140) présentant deux barres longitudinales (144) reliant les montants de coin (142) entre eux et présentant en outre deux barres transversales (146) agencées sur les barres longitudinales (144), et il étant prévu un kit d'adaptation (80) avec des roulettes (810), qui est agencé de manière interchangeable sur le châssis (140), le kit d'adaptation (80) étant agencé sur les barres transversales (146) du contenant, le kit d'adaptation (80) présentant quatre oeillets de retenue pour l'agencement sur les deux barres transversales, les oeillets de retenue (840) étant conçus en forme de U et, en outre, les oeillets de retenue (840) étant formés en taille et en forme de manière correspondante aux barres transversales (146) et étant donc conçus pour être agencés sur les barres transversales (146) du contenant (10), et, en outre, les oeillets de retenue (840) étant disposés de manière fixe aux coins d'une partie de cadre (820) .

2. Contenant de vente et de transport (10) selon la revendication 1, **caractérisé en ce que** le kit d'adaptation (80) présente au moins un rouleau (810), de préférence quatre rouleaux.

3. Contenant de vente et de transport (10) selon la revendication 1, **caractérisé en ce que** le kit d'adaptation (80) présente au moins un dispositif de freinage (830), le dispositif de freinage (830) agissant de préférence sur deux rouleaux (810) sur l'un des côtés transversaux du contenant (10).

4. Contenant de vente et de transport (10) selon la revendication 3, **caractérisé en ce que** le dispositif de freinage (830) présente un levier de freinage (832).

5. Contenant de vente et de transport (10) selon la revendication 4, **caractérisé en ce que** le levier de frein (832) est fabriqué à partir d'une pièce en fil métallique façonnée.

6. Contenant de vente et de transport (10) selon la revendication 1, **caractérisé en ce que** le kit d'adaptation (80) présente une forme principalement rectangulaire.

7. Contenant de vente et de transport (10) selon la revendication 1, **caractérisé en ce que** les oeillets de retenue (840) sont agencés de manière symétrique.

8. Contenant de vente et de transport (10) selon la revendication 1, **caractérisé en ce que** le kit d'adaptation (80) est formé de pièces de cadre (820).
